# EUROPÄISCHE PATENTANMELDUNG

(11) **EP 2 407 841 A2**
(43) Veröffentlichungstag der Anmeldung: **18.01.2012**
(21) Anmeldenummer: 10191532.0
(22) Anmeldetag: 17.11.2010
(51) Int. Cl.: G05B 19/042

(54) **Verfahren und System zur Inbetriebnahme oder Aktualisierung einer oder mehrerer Maschinen aus der Automatisierungstechnik**

(30) Priorität: 16.07.2010 DE 102010027290
(71) Anmelder: SIEMENS AKTIENGESELLSCHAFT, 80333 München (DE)
(72) Erfinder: Illner, Sven, 08209, Auerbach (DE); Keller, Jochen, 09125, Chemnitz (DE); Tanneberger, Lars, 09439, Amtsberg (DE)

(57) **Zusammenfassung**

Es werden ein Verfahren und ein System zur Inbetriebnahme oder Aktualisierung einer oder mehrerer Maschinen aus der Automatisierungstechnik angegeben, wobei ein Softwarepaket (12), welches ein ausführbares Programm (14) und Daten (16) jeweils zur Inbetriebnahme oder Aktualisierung einer oder mehrerer Maschinen enthält, auf einem Server (18) des Herstellers der Maschine (10) gespeichert ist, vom Server (18) des Maschinenherstellers über das Internet (20) an zumindest einen Server (22, 24) des Betreibers der Maschine (10) übermittelt wird, wobei der Server (22, 24) des Betreibers mit der oder jeder zu aktualisierenden Maschine (10) kommunikativ verbunden ist, wobei nach der Übermittlung des Softwarepakets (12) das enthaltene Programm (14) entweder vom Server (22, 24) des Betreibers der Maschine (10) oder einer oder der jeweiligen Maschine (10) ausführt und durch das Programm (14) die Inbetriebnahme oder Aktualisierung der Maschine (10) gesteuert wird, indem Daten (16) aus dem Softwarepaket (12) vom Server (22, 24) des Betreibers auf die zu aktualisierende Maschine (10) übermittelt werden.

## Beschreibung

Die Erfindung betrifft ein Verfahren zur Inbetriebnahme oder Aktualisierung einer oder mehrerer Maschinen aus der Automatisierungstechnik sowie ein System, das nach diesem Verfahren arbeitet.

Für die Verwaltung, den Betrieb und die Instandhaltung von Maschinen aus der Automatisierungstechnik, beispielsweise Maschinen in einer Fertigungsstraße, werden üblicherweise Werkzeuge eingesetzt, wie sie von der Siemens AG unter der Bezeichnung MCIS, von der Auvesy GmbH & Co. KG unter der Bezeichnung Versiondog oder von der Rockwell Automation Inc. unter der Bezeichnung VersionWorks bekannt sind. Diese Werkzeuge basieren auf einem Server-Client-Prinzip. Dabei sind alle Maschinen miteinander vernetzt und mit entsprechender Client-Software versehen. Von einem zentralen Rechner (Server) können unter anderem der Zustand der Maschine überwacht, gesichert und im Fehlerfall wieder eingespielt sowie Teilprogramme verwaltet und versioniert werden. Eine Unterstützung der Inbetriebnahme, Hochrüstung und Instandhaltung ist in diesen Werkzeugen nur rudimentär vorhanden und bezieht sich immer auf die Gesamtheit der Maschine. Ändert sich der Ausbau der Maschinen gegenüber dem ursprünglichen Zustand, muss diese manuell und vor Ort durch einen Experten wieder in Betrieb genommen werden. Hingegen wird in bestimmten Situationen ein Austausch von Komponenten, also der Ersatz einer Komponente durch eine gleiche Komponente, durch die bereits erwähnten Systeme unterstützt.

Eine Aufgabe der Erfindung besteht darin, einfache Möglichkeiten zur Inbetriebnahme oder Aktualisierung einer oder mehrerer Maschinen aus der Automatisierungstechnik zu schaffen. Diese Aufgabe wird erfindungsgemäß mit den Merkmalen der unabhängigen Ansprüche gelöst. Dazu ist bei einem Verfahren zur Inbetriebnahme oder Aktualisierung - im Weiteren auch kurz nur als Inbetriebnahme bezeichnet - einer oder mehrerer Maschinen aus der Automatisierungstechnik - im Weiteren zusammenfassend als Maschine bezeichnet - Folgendes vorgesehen: Ein Softwarepaket, welches ein ausführbares Programm und Daten jeweils zur Inbetriebnahme oder Aktualisierung einer oder mehrerer Maschinen enthält, wird auf einem Server eines Herstellers der Maschine bereitgestellt und ist entsprechend dort gespeichert und abrufbar. Vom Server des Maschinenherstellers wird das Softwarepaket an zumindest einen Server des Betreibers der Maschine übermittelt. Für die Übermittlung vom Herstellerserver zum Betreiberserver kommt bevorzugt das Internet in Betracht. Der Server des Betreibers, auf dem das Softwarepaket zunächst empfangen wird, ist mit der oder jeder zu aktualisierenden Maschine kommunikativ verbunden, z.B. durch ein lokales Netzwerk des Maschinenbetreibers. Nach der Übermittlung des Softwarepakets wird das enthaltene Programm ausgeführt und durch das Programm erfolgt die Inbetriebnahme oder Aktualisierung der Maschine. Die Inbetriebnahme oder Aktualisierung der Maschine umfasst zumindest die Übermittlung von Daten, z.B. Konfigurations- oder Parametrierdaten, aus dem Softwarepaket vom Server des Betreibers auf die zu aktualisierende Maschine. Die Ausführung des Programms kann dabei entweder durch einen Server des Betreibers der Maschine oder eine oder jede der jeweils zu aktualisierenden Maschinen erfolgen. Das Programm wird dabei entweder durch einen Server des Betreibers der Maschine oder eine oder jede der jeweils zu aktualisierenden Maschinen ausgeführt.

Ein System zur Inbetriebnahme oder Aktualisierung einer oder mehrerer Maschinen aus der Automatisierungstechnik ist zur Durchführung des Verfahrens wie hier und nachfolgend beschrieben eingerichtet und/oder umfasst Mittel zur Durchführung des Verfahrens und seiner Ausgestaltungen. Zur Einrichtung des Systems und zu den Mitteln zur Durchführung des Verfahrens gehört dabei zumindest auf Betreiberseite zumindest ein Server und zumindest eine zu aktualisierende Maschine sowie eine geeignete dauerhafte oder zumindest temporäre kommunikative Verbindung zwischen den involvierten Servern einerseits und einem Betreiberserver und der oder jeder Maschine andererseits sowie weiterhin zumindest eine Speichereinheit zum lokalen Speichern des Softwarepakets und zumindest eine Verarbeitungseinheit zur Ausführung des von dem Softwarepaket umfassten Programms.

Der Vorteil der Erfindung besteht darin, dass ein Softwarepaket mit den Daten zur Inbetriebnahme oder Aktualisierung der Maschine(n) und dem ausführbaren Programm zur Inbetriebnahme oder Aktualisierung der Maschine(n) für eine erste Inbetriebnahme, eine erneute Inbetriebnahme (Wiederinbetriebnahme) nach Änderung des Ausbaus der Maschine(n) oder eine Aktualisierung, von einem Server des Betreibers der Maschinen oder einem Server des Maschinenherstellers bereitgestellt werden kann und nach Abruf des so bereitgestellten Softwarepakets die Inbetriebnahme oder Aktualisierung der Maschine(n) automatisch, nämlich unter Kontrolle des von dem Softwarepaket umfassten Programms, erfolgen kann. In Abhängigkeit von örtlichen Gegebenheiten kann der Start des Softwarepakets von einem zentralen Server, mehreren Servern des Betreibers der Maschinen oder zumindest einer Maschine selbst aus erfolgen. Die Anreise von qualifiziertem Inbetriebnahme-personal zum Ort des Betriebs der Maschine(n) ist damit häufig nicht notwendig.

Sind die Bedingungen für einen Start des Softwarepakets durch z.B. einen zentralen Server nicht gegeben, können auch der Start und die Steuerung der Abarbeitung des Softwarepakets manuell vor Ort entsprechend einer einfachen, evtl. vom Programm umfassten Anleitung erfolgen. Dabei muss der Techniker vor Ort nicht notwendig Kenntnis vom Inhalt des Softwarepakets und der Inbetriebnahmeabfolge haben.

Aufgrund der kommunikativen Verbindung der involvierten Einheiten untereinander, nämlich Herstellerserver und zumindest ein Betreiberserver einerseits und Betreiberserver und Maschine(n) andererseits, können bei der Inbetriebnahme/Aktualisierung generierte Ergebniszustandsdaten entlang der kompletten Kette der involvierten Einheiten erfasst und zu einer jeweils übergeordneten Einheit, z.B. einen zentralen Betreiberserver oder dem Herstellerserver übermittelt werden. Der Fortschritt und der Erfolg oder auch ein evtl. Misserfolg der Inbetriebnahme/Aktualisierung kann damit jederzeit nachverfolgt werden und/oder kann für Protokollierungs- und sonstige Zwecke archiviert werden. Aus der Kopplung der Einheiten auf Seiten des Maschinenbetreibers mit zumindest dem Server des Maschinenherstellers können sich weitere Vorteile ergeben, nämlich z.B. eine direkte Rückmeldung an den Maschinenhersteller, insbesondere über einen Maschinenzustand oder dergleichen, über den Status oder den Erfolg der Inbetriebnahme/ Aktualisierung.

Das Verfahren basiert auf einem Client-Server-Konzept. Bei dem Verfahren erstellt z.B. der Hersteller (OEM) der Maschinen aus der Automatisierungstechnik (z.B. Werkzeugmaschinen) zur Inbetriebnahme oder Aktualisierung einer oder mehrerer Maschinen ein Softwarepaket, über das die Inbetriebnahme oder Aktualisierung erfolgt und speichert dieses auf einem Server für bei ihm bestellte oder durch ihn bereits ausgelieferte Maschinen ab. Es kann sowohl ein solches Softwarepaket für eine einzelne konkrete Maschine als auch für eine Maschinenserie erstellt und abgespeichert werden. Das Softwarepaket umfasst einerseits Daten zur Inbetriebnahme oder Aktualisierung der Maschine oder der Maschinen und andererseits ein ausführbares Programm, das die Inbetriebnahme oder Aktualisierung der Maschine oder der Maschinen steuert und/oder über das die Inbetriebnahme oder Aktualisierung der Maschine oder der Maschinen erfolgt, wobei das Programm zur Inbetriebnahme/Aktualisierung auch auf programmexterne Funktionalität, also z.B. von der Maschine bereits umfasste Funktionalität zurückgreifen kann. Die Daten zur Inbetriebnahme oder Aktualisierung der Maschine können z.B. in Form von Firmware, Werkstückprogrammen, Leistungsdaten der Motoren der Maschine, Drehzahlen und Ausbaustufen von Motorspindeln, Kapazität von Werkzeugmagazinen, Ausgestaltung der Werkzeugwechseleinrichtungen und Typen von Messwertgebern der Maschine vorliegen. Weiterhin kann es sich bei den Daten z.B. um Verstärkungsfaktoren der Regler der Maschine handeln.

Der Server oder die Server übernehmen die Planung und Verteilung des Softwarepakets zur Inbetriebnahme oder Aktualisierung der Maschine und Server und Maschine(n) sind z.B. mittels Netzwerk oder Internet kommunikativ verbunden. Für die Kommunikation können Standardmechanismen wie z.B. VPN (Virtual Protected Network) via TCP/IP-basierenden Netzen genutzt werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Gemäß einer Ausführungsform der Erfindung ist vorgesehen, dass ein Softwarepaket, welches das Programm und die Daten enthält, vom Server des Betreibers auf die oder jede zu aktualisierende Maschine übermittelt wird und das Programm auf der oder jeder Maschine ausgeführt wird und dass durch das Programm die Inbetriebnahme oder Aktualisierung der jeweiligen Maschine erfolgt. Dies kann vorteilhaft sein, wenn der Server keine oder keine ausreichende Verarbeitungsfunktionalität zur Ausführung des Programms umfasst oder wenn beim Aktualisieren mehrerer Maschinen eine parallele Aktualisierung der Maschinen durch Ausführung des Programms durch diese selbst Vorteile, insbesondere Geschwindigkeitsvorteile, gegenüber einer quasi-parallelen oder sequentiellen Ausführung des Programms durch den Betreiberserver bietet.

Gemäß einer alternativen Ausführungsform ist vorgesehen, dass das Programm durch einen zentralen Server des Betreibers ausgeführt wird. Dieser ist dann hinsichtlich seines Leistungsumfangs an die mit der Inbetriebnahme/Aktualisierung einhergehenden Anforderungen angepasst. Die Inbetriebnahme/Aktualisierung durch den zentralen Server hat zudem den Vorteil, dass nur die tatsächlich bei der jeweiligen Maschine benötigten Daten über das Kommunikationsnetzwerk des Maschinenbetreibers übermittelt werden müssen, so dass insoweit mit der Inbetriebnahme/Aktualisierung nur eine vergleichsweise geringe Zusatzbelastung des Kommunikationsnetzwerks einhergeht.

Wenn neben dem einem zentralen Standort des Betreibers zugeordneten zentralen Server an einem oder mehreren weiteren Standorten des Betreibers lokale Server zumindest zum Zwischenspeichern der Daten beim Übermitteln vom zentralen Server auf die zu aktualisierende Maschine(n) verwendet werden, kann im Vergleich zu einem alle Maschinen bedienenden zentralen Server mit einer entsprechenden Kommunikationsperipherie eine weniger performante Kommunikationsverbindung zwischen dem zentralen Server und dem oder jedem lokalen Server ausreichen. Zumindest die Daten oder einzelne Daten des ursprünglichen Softwarepakets müssen nur einmal an den lokalen Server des jeweiligen weiteren Standorts des Herstellers übermittelt werden und können von dort unmittelbar an die jeweilige(n) Maschine(n) übertragen werden.

Wenn das Programm durch ein oder mehrere lokale Server des Betreibers ausgeführt wird, ergibt sich grundsätzlich der oben bereits im Zusammenhang mit der Erläuterung der Programmausführung durch die jeweilige(n) Maschine(n) erläuterte Vorteil. Zusätzlich braucht bei der Verwendung lokaler Server zur Ausführung des Programms die jeweilige Maschine keine besondere Verarbeitungsfunktionalität aufweisen, die evtl. für die Ausführung des Programms erforderlich ist. Es ergibt sich also der mit der Ausführung durch mehrere Einheiten, hier mehrere lokale Server, z.B. erreichbare Geschwindigkeitsvorteil, ohne dass jede einzelne Maschine besonders zur Ausführung des Programms zur Inbetriebnahme/Aktualisierung ertüchtigt sein müsste. Auf Seiten der Maschine(n) werden also Kosten vermieden, die sich ansonsten aufgrund einer evtl. Notwendigkeit zur Hochrüstung der Maschine im Hinblick auf eine Ausführbarkeit des Programms ergeben könnten.

Wenn bei einer Mehrzahl von Maschinen von dem Programm für jede Maschine die oder nur die zur Inbetriebnahme oder Aktualisierung der jeweiligen Maschine benötigen Daten ermittelt und an die Maschine übermittelt werden, erfolgt nur die Übertragung derjenigen Daten, die zur Inbetriebnahme oder Aktualisierung der jeweiligen Maschine tatsächlich benötigt werden. Die Kapazität des Kommunikationsnetzwerks wird also nicht unnötig mit der Übertragung überflüssiger Daten belastet. Für die Entscheidung, welche Daten benötigt werden kann kann z.B. eine bei der jeweiligen Maschine abgefragte Statusinformation herangezogen werden.

Als Maschine oder Maschinen aus der Automatisierungstechnik kommen bevorzugt eine Werkzeugmaschine bzw. mehrere Werkzeugmaschinen in Betracht. Für Werkzeugmaschinen eignet sich die automatische Inbetriebnahme/Wiederinbetriebnahme oder Aktualisierung besonders, weil es sich bei Werkzeugmaschinen normalerweise um modulare Anlagen handelt, die entsprechend durch Hinzunahme weiterer Module oder Austausch einzelner Module hochgerüstet oder modifiziert, also an einen geänderten Bedarf angepasst werden können. Speziell eine Hinzunahme weiterer Module oder auch nichtkompatibles Tauschen oder Entfernen von Komponenten hat bisher eine Wiederinbetriebnahme der geänderten Maschine durch geschultes Personal vor Ort erfordert. Durch das vorgeschlagene Verfahren zur automatischen Inbetriebnahme oder Aktualisierung lassen sich die Kosten, die mit der Notwendigkeit des Einsatzes von speziell geschultem Personal verbunden sind, aber auch die z.B. mit der Anreise des Personals und dem tatsächlichen Inbetriebnahmevorgang verbundenen Stillstandszeiten zumindest reduzieren.

Die Erfindung betrifft auch ein Computerprogramm mit durch einen Computer ausführbaren Programmcodeanweisungen zur Implementierung des Verfahrens wie hier und nachfolgend beschrieben, wenn das Computerprogramm auf einem Computer ausgeführt wird, und ein Speichermedium mit einem solchen, durch einen Computer ausführbaren Computerprogramm. Als Computerprogramm ist dabei nicht nur das oben erwähnte, von dem Softwarepaket umfasste Programm zu verstehen, sondern auch eine Software, die den Empfang und die evtl. weitere Übermittlung des Softwarepakets und sodann die Ausführung des von dem Softwarepaket umfassten Programms bewirkt usw.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Anlagenkonstellation mit einem Maschinenherstellerserver und mehreren Maschinenbetreiberservern an unterschiedlichen Standorten des Maschinenbetreibers zur Inbetriebnahme oder Aktualisierung einer oder mehrerer der Maschinen des Maschinenbetreibers,
- FIG 2: eine Anlagenkonstellation ähnlich wie in FIG 1 mit einem zentralen, maschinenbetreiberseitigen Server und
- FIG 3: eine Anlagenkonstellation gemäß FIG 1 oder FIG 2 mit einem zentralen, maschinenbetreiberseitigen Server und zumindest einem weiteren lokalen maschinenbetreiberseitigen Server an einem vom Standort des zentralen Servers unterschiedlichen Standort.

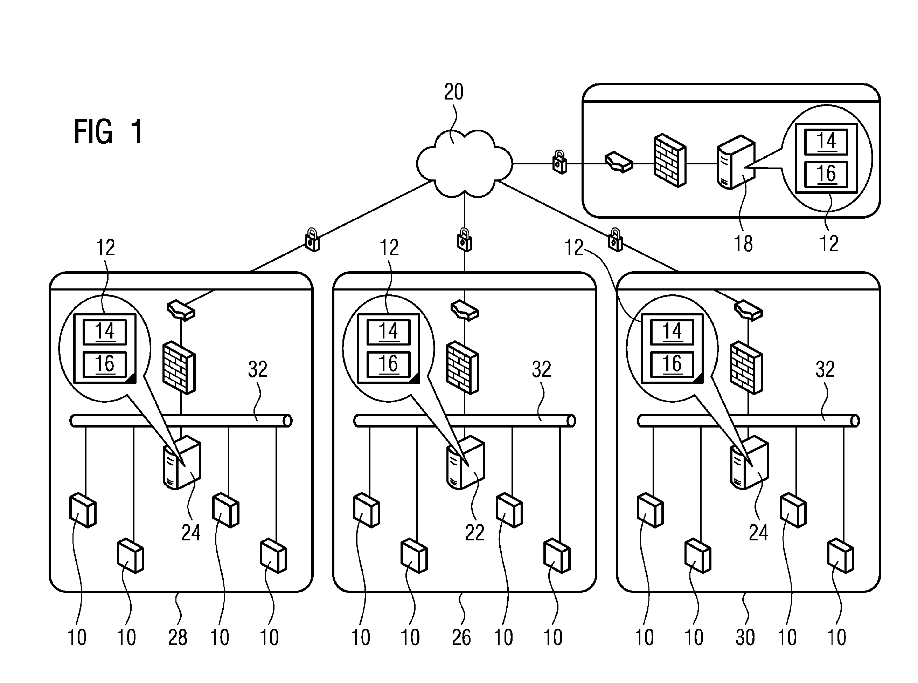

FIG 1 zeigt schematisch vereinfacht eine Anlagenkonstellation für ein Verfahren zur Inbetriebnahme oder Aktualisierung einer oder mehrerer Maschinen 10 aus der Automatisierungstechnik und mit der Gesamtheit der involvierten Einheiten auch ein System zur Inbetriebnahme oder Aktualisierung einer oder mehrerer Maschinen 10 aus der Automatisierungstechnik.

Bei dem Verfahren und in dem System wird ein Softwarepaket 12, welches ein ausführbares Programm 14 und Daten 16 zur Inbetriebnahme oder Aktualisierung einer oder mehrerer Maschinen 10 enthält, auf einem Server 18 des Maschinenherstellers bereit gestellt und vom Server 18 des Maschinenherstellers über das Internet 20, und zwar ggf. verschlüsselt, z.B. über eine so genannte VPN-Verbindung, an einen oder mehrere Server 22, 24 des Betreibers der Maschine 10 übermittelt.

Der oder jeder Server 22, 24 ist mit der oder jeder zu aktualisierenden Maschine 10 kommunikativ verbunden. Bei einer Mehrzahl von Servern 22, 24 auf Seiten des Maschinenbetreibers wird zumindest einer als zentraler Server 22 an einem zentralen Standort oder Produktionsstandort 26, z.B. dem Hauptsitz des Betreibers, vorgehalten. Weitere Server 22, 24 können dann als lokale Server 24 an lokalen Standorten oder Produktionsstandorten 26, 30 vorgesehen sein. Innerhalb eines Standortes 26, 28, 30 sind der jeweilige Server 22, 24 und die oder jede zum Standort 26-30 gehörige Maschine 10 kommunikativ verbunden, z.B. über ein lokales Netzwerk 32 (LAN). Es ist üblich, aber für weitere Details der Erfindung nicht weiter von Bedeutung, Server 18, 22, 24 und lokale Netzwerke 32 zum Internet 20 mit einer sogenannten Firewall abzusichern (in den Figuren schematisch vereinfacht als Backsteinwand dargestellt).

Bei der in FIG 1 dargestellten Konfiguration wird das auf dem Server 18 des Maschinenherstellers bereitgestellte Softwarepaket 12 vom Maschinenbetreiber abgerufen oder durch den Maschinenhersteller an den Maschinenbetreiber übertragen; beides wird hier und im Weiteren als Übertragung bezeichnet. Ein übertragenes Softwarepaket 12 wird auf einem oder mehreren Servern 22, 24 des Maschinenbetreibers empfangen und dort gespeichert oder zumindest zwischengespeichert. Es handelt sich dann um eine oder mehrere lokale, maschinenbetreiberseitige Kopien des vom Maschinenhersteller bereitgestellten Softwarepakets 12. In der Darstellung wird für die oder jede derartige Kopie das Bezugszeichen des vom Maschinenhersteller bereitgestellten Softwarepakets 12 verwendet und das Softwarepaket 12 zusätzlich mit einer ausgefüllten Ecke als Kopie ausgezeichnet. Das Softwarepaket 12 umfasst als Programm 14 ein ausführbares Softwareprogramm, also z.B. inklusive einer evtl. erforderlichen Runtime, und Daten 16 zur Inbetriebnahme oder Aktualisierung der Maschinen 10. Von den Daten 16 können auch Konfigurationsdaten und/oder Steuerdaten der jeweiligen Maschine(n) 10 umfasst sein.

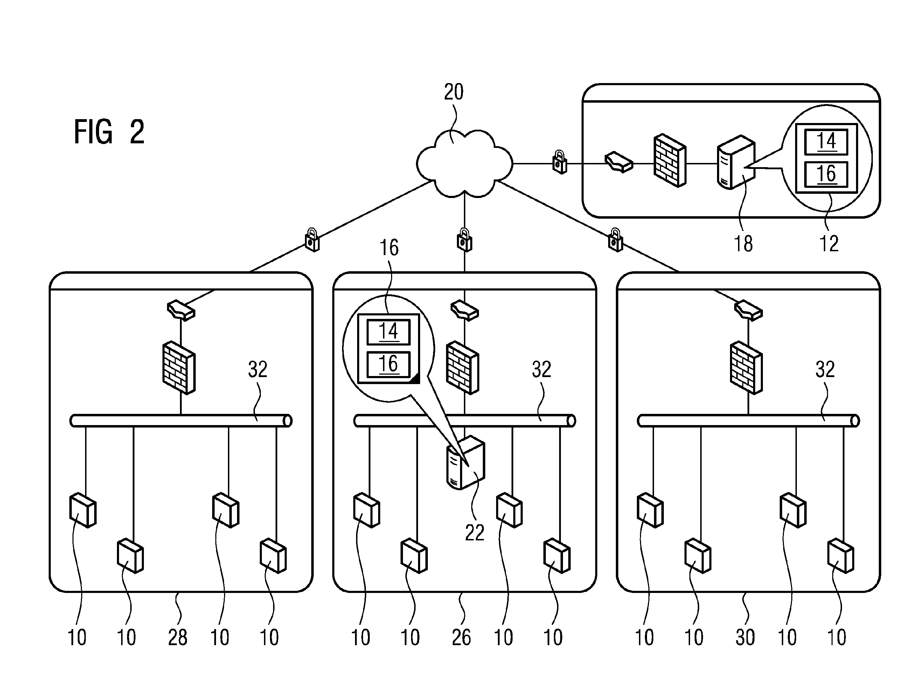

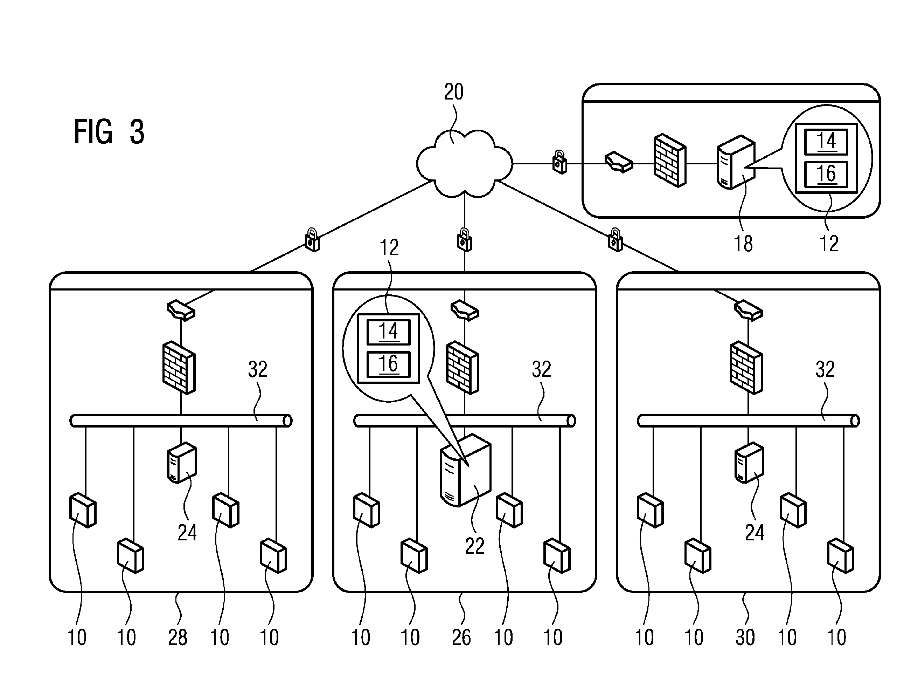

Die in FIG 2 und FIG 3 dargestellten Konstellationen unterscheiden sich von derjenigen in FIG 1 durch die Art und die Anzahl der Server 22, 24 auf Seiten des Maschinenbetreibers. Die in FIG 2 dargestellte Konstellation weist nur einen zentralen Server 22 auf. Die in FIG 3 dargestellte Konstellation weist neben einem zentralen Server 22 lokale Server 24, ähnlich wie in FIG 1 auf, wobei die in FIG 3 dargestellten lokalen Server 24 hinsichtlich ihrer Leistungsfähigkeit hinter denen in FIG 1 zurückstehen und im Wesentlichen zum lokalen Zwischenspeichern des Softwarepakets 12, das ein ausführbares Programm 14 und Daten 16 enthält, genutzt werden.

Hinsichtlich des vom übertragenen Softwarepaket 12 (FIG 1, FIG 2, FIG 3) umfassten Programms 14 ist vorgesehen, dass dieses nach der Übertragung des Softwarepakets 12 ausgeführt wird um die Inbetriebnahme oder Aktualisierung der oder jeder jeweiligen Maschine zu veranlassen. Die Ausführung des Programms 14 kann manuell durch einen Bediener vor Ort gestartet werden, z.B. nachdem diesem die erfolgreiche Übertragung des Softwarepakets 12 signalisiert wurde oder der Bediener sich in sonst geeigneter Weise von einer Verfügbarkeit eines Softwarepakets 12 überzeugt hat. Die Ausführung des Programms 14 kann aber auch automatisch gestartet werden, z.B. im Anschluss an den Übertragungsvorgang des Softwarepakets 12. Im Rahmen der Ausführung des Programms 14 werden Daten 16 des Softwarepakets 12 gleichzeitig, quasi-gleichzeitig oder sukzessive an jede in Betrieb zu nehmende oder zu aktualisierende Maschine 10 übermittelt.

Die Ausführung des Programms 14 kann dabei durch den jeweiligen Server 22, 24 oder die in Betrieb zu nehmende oder zu aktualisierende Maschine 10 selbst, z.B. auf einer Steuerungseinrichtung der jeweiligen Maschine 10, erfolgen. Das Programm 14 steuert in jedem Fall die Inbetriebnahme oder Aktualisierung der jeweiligen Maschine 10 und bewirkt die Übertragung der für die jeweilige Maschine 10 relevanten Daten an diese. Das Programm 14 übernimmt auch, je nach Situation, für jede zu aktualisierende Maschine 10 die Ermittlung der von dieser jeweils zur Inbetriebnahme oder Aktualisierung benötigen Daten 16. Dies deckt eine Alternative, neben einer ansonsten ebenfalls möglichen generellen Übermittlung sämtlicher Daten 16 an jede Maschine 10, ab. Bei einer vorherigen Ermittlung der relevanten Daten 16 erfolgt ein Datentransfer zur Maschine 10 nur in einem minimal erforderlichen Umfang. Zudem kann das Programm 14 die oder einzelne Daten 16, z.B. Konfigurationsdaten und/oder Betriebsparameter, unmittelbar an die in der Maschine 10 dafür vorgesehenen Speicherstellen schreiben oder die Daten 16 zumindest für eine Übernahme an solche Speicherstellen auszeichnen. Bei einer Übermittlung sämtlicher Daten 16 des Softwarepakets 12 an die Maschine 10 ist für das ausführbare Programm 14 im Softwarepaket 12 mittels einer insbesondere vom Programm 14 umfassten Verarbeitungs- oder Filterfunktionalität durch eine Verarbeitung oder Filterung von Zustandsinformationen der Maschine 10 eine Auswahl der relevanten Daten 16 und nachfolgend eine Übernahme solcher relevanter Daten 16 in entsprechende Speicherstellen möglich.

Bei der Bearbeitung des Softwarepakets 12 auf dem oder den Servern 22, 24 des Maschinenbetreibers wird das ausführbare Programm 14 zur Inbetriebnahme oder Aktualisierung der Maschine(n) 10 z.B. auf dem oder den Servern 22, 24 gestartet. Dabei wird Verbindung zu der zu aktualisierenden Maschine 10 aufgenommen und ein Kommunikationskanal etabliert. Über diesen erfolgt die Inbetriebnahme oder Aktualisierung der Maschine 10. Dabei bleibt die Kontrolle vorzugsweise jederzeit bei dem Softwarepaket 12 auf dem Server 22, 24. Bei der Inbetriebnahme oder Aktualisierung können durch das ausführbare Programm 14 des Softwarepaketes 12 auch Softwarefunktionen, die standardmäßig auf den Maschinen 10 vorhanden sind, genutzt werden.

Bei einer weiteren oder alternativen Ausführungsform wird die Bearbeitung des Softwarepakets 12 auf der jeweiligen in Betrieb zu nehmenden oder zu aktualisierenden Maschine(n) 10 durchgeführt. Hierzu bauen der oder die Server 22, 24 des Maschinenbetreibers eine Verbindung zur Maschine 10 bzw. zu den Maschinen 10 auf. Über diese wird das Softwarepaket 12 an die oder jede Maschine 10 übertragen. Nach dieser Übertragung wird die vollständig automatisierte Abarbeitung des Softwarepakets 12 auf der Maschine 10 oder den Maschinen 10 durch den oder die Server 22, 24 des Maschinenbetreibers oder manuell, z.B. durch einen Bediener der Maschine, gestartet.

In einer Konstellation, wie in FIG 3 dargestellt, bei der auf Maschinenbetreiberseite ein zentraler Server 22 vorgesehen ist, erfolgt die Inbetriebnahme oder Aktualisierung der Maschinen 10, indem an mindestens einem Standort 28, 30, an dem kein zur Inbetriebnahme oder Aktualisierung der Maschinen 10 eingerichteter oder geeigneter Server vorgesehen ist, ein lokaler Server 22 vorgesehen ist, der das Programm 14 und/oder die Daten 16, welche vom zentralen Server 22 an die Maschine 10 oder die Maschinen 10 übermittelt werden, zwischenspeichert. Die Übermittlung des Programms 14 und/oder der Daten 16 vom zentralen Server 22 des Betreibers erfolgt also stets über den zumindest einen weiteren, lokalen Server 24 an die Maschine 10 oder die Maschinen 10. Bei einer Übermittlung des Programms an die Maschine 10 oder die Maschinen 10 erfolgt auch die Ausführung des Programms 14 durch die jeweilige Maschine 10; ansonsten erfolgt die Ausführung des Programms 14 durch den zentralen Server 22 und das Programm steuert die Übermittlung der Daten 16 über den jeweiligen lokalen Server 24 an jede Maschine 10.

Nach Abschluss der Bearbeitung des Softwarepakets 12 wird von der oder den Maschinen 10 ein dort erzeugtes Protokoll zur Prüfung und Dokumentation an den oder die Server 22, 24 des Maschinenbetreibers übertragen. Diese Informationen können automatisiert oder manuell an den Server 18 des Maschinenherstellers übertragen werden und liefern diesem wertvolle Informationen zum Zustand der ausgelieferten Maschinen 10. Eventuelle Schwachstellen in der Konstruktion der Maschinen 10 können so vom Maschinenhersteller erkannt werden und die Serviceplanung verbessert werden.

Zusammenfassend können damit die in den Figuren dargestellten Ausführungsbeispiele wie folgt beschrieben werden: Bei der Konstellation gemäß FIG 1 besitzt jeder Produktionsstandort 26, 28, 30 einen eigenen, vollwertigen Server 22, 24 (Update-Server) zur Inbetriebnahme oder Aktualisierung der Maschinen 10. Bei der Konstellation gemäß FIG 2 besitzt nur einer der Produktionsstandorte 26-30 einen zentralen Server 22 (Update-Server) zur Inbetriebnahme oder Aktualisierung der Maschinen 10. Der zentrale Server 22 ist zur Verwaltung sämtlicher Fertigungslinien, auch an entfernten Standorten 28, 30, und der davon umfassten Maschinen 10 vorgesehen. Bei der Konstellation gemäß FIG 3 besitzt ein (zentraler) Produktionsstandort 26 einen vollwertigen, zentralen Server 22 zur Inbetriebnahme oder Aktualisierung der Maschinen 10 und die restlichen Produktionsstandorte 28, 30 besitzen einen (lokalen) Server 24, mit eingeschränkter Funktionalität. Der oder jeder lokale Server 24 mit eingeschränkter Funktionalität übernimmt unter anderem das Zwischenspeichern (Caching) der Daten 16 oder des Softwarepakets 12, das ein ausführbares Programm 14 und Daten 16 enthält, welche bzw. welches vom zentralen Server 22 zur Inbetriebnahme oder Aktualisierung der Maschinen 10 an die Maschinen 10 übermittelt werden. Diese Konstellation ist insbesondere dann von Interesse, wenn die Produktionsstandorte mittels einen instabilen Verbindung über das Internet oder einem anderen instabilen Netz miteinander verbunden sind oder Kontrollfunktionen vor Ort notwendig sind.

Für Maschinenaktualisierungen oder Maschineninbetriebnahmen sind unterschiedliche Planungsstrategien denkbar, nämlich insbesondere eine Aktualisierung im Rahmen einer geplanten Wartung der Fertigungslinie oder eine Aktualisierung mit Verwendung eines Leerteils, wobei innerhalb einer Fertigungslinie bei Eintreffen des Leerteils bei jeweils einer Maschine für diese die Aktualisierung erfolgt, oder eine Wiederinbetriebnahme nach ungeplanter Wartung.

Damit lässt sich das oben Gesagte wie folgt zusammenfassen: Es werden ein Verfahren und ein System zur Inbetriebnahme oder Aktualisierung einer oder mehrerer Maschinen aus der Automatisierungstechnik angegeben, wobei ein Softwarepaket 12, welches ein ausführbares Programm 14 und Daten 16 jeweils zur Inbetriebnahme oder Aktualisierung einer oder mehrerer Maschinen enthält, auf einem Server 18 des Herstellers der Maschine(n) 10 gespeichert ist, vom Server 18 des Maschinenherstellers über das Internet 20 an zumindest einen Server 22, 24 des Betreibers der Maschine 10 übermittelt wird, wobei der Server 22, 24 des Betreibers mit der oder jeder zu aktualisierenden Maschine 10 kommunikativ verbunden ist, wobei nach der Übermittlung des Softwarepakets 12 das enthaltene Programm 14 entweder vom jeweiligen Server 22, 24 des Betreibers der Maschine 10 oder einer oder der jeweiligen Maschine 10 ausführt und durch das Programm 14 die Inbetriebnahme oder Aktualisierung der Maschine 10 gesteuert wird, indem Daten 16 aus dem Softwarepaket 12 vom Server 22, 24 des Betreibers auf die zu aktualisierende Maschine 10 übermittelt werden.

## Patentansprüche

1. Verfahren zur Inbetriebnahme oder Aktualisierung einer oder mehrerer Maschinen (10) aus der Automatisierungstechnik,
- wobei ein Softwarepaket (12), welches ein ausführbares Programm (14) und Daten (16) jeweils zur Inbetriebnahme oder Aktualisierung einer oder mehrerer Maschinen enthält, auf einem Server (18) des Herstellers der Maschine (10) gespeichert ist, vom Server (18) des Maschinenherstellers über das Internet (20) an zumindest einen Server (22, 24) des Betreibers der Maschine (10) übermittelt wird,
- wobei der Server (22, 24) des Betreibers mit der oder jeder zu aktualisierenden Maschine (10) kommunikativ verbunden ist,
- wobei nach der Übermittlung des Softwarepakets (12) das enthaltene Programm (14) ausgeführt und durch das Programm (14) die Inbetriebnahme oder Aktualisierung der Maschine (10) gesteuert wird oder erfolgt, indem Daten (16) aus dem Softwarepaket (12) vom Server (22, 24) des Betreibers auf die zu aktualisierende Maschine (10) übermittelt werden.

2. Verfahren nach Anspruch 1, wobei das Programm (14) und die Daten (16) vom Server (18) des Betreibers auf die oder jede zu aktualisierende Maschine (10) übermittelt werden und das Programm (14) auf der oder jeder Maschine (10) ausgeführt wird und wobei vom Programm (14) oder durch das Programm (14) die Inbetriebnahme oder Aktualisierung der jeweiligen Maschine (10) gesteuert wird bzw. erfolgt.

3. Verfahren nach Anspruch 1, wobei das Programm (14) durch einen zentralen Server (22) des Betreibers ausgeführt wird.

4. Verfahren nach Anspruch 3, wobei neben dem einem zentralen Standort (26) des Betreibers zugeordneten zentralen Server (22) an einem oder mehreren weiteren Standorten (26, 30) des Betreibers vorgehaltene lokale Server (24) zumindest zum Zwischenspeichern der Daten (16) beim Übermitteln vom zentralen Server (18) auf die zu aktualisierende Maschine (10) verwendet werden.

5. Verfahren nach Anspruch 1, wobei das Programm (14) durch ein oder mehrere lokale Server (24) des Betreibers ausgeführt wird.

6. Verfahren nach einem der vorangehenden Ansprüche, wobei bei einer Mehrzahl von Maschinen (10) vom Programm (14) für jede Maschine (10) aus den Daten (16) zur Inbetriebnahme oder Aktualisierung der Maschinen (10) die zur Inbetriebnahme oder Aktualisierung der jeweiligen Maschine (10) benötigen Daten (16) ermittelt und an die Maschine (10) übermittelt werden.

7. Verfahren nach einem vorhergehenden Ansprüche, **dadurch gekennzeichnet, dass** die Maschine aus der Automatisierungstechnik als Werkzeugmaschine ausgebildet ist oder die Maschinen aus der Automatisierungstechnik als Werkzeugmaschinen ausgebildet sind.

8. System zur Inbetriebnahme oder Aktualisierung einer oder mehrerer Maschinen aus der Automatisierungstechnik, wobei das System eingerichtet ist zur Durchführung des Verfahrens nach einem der Ansprüche 1 bis 7 und/oder Mitteln zur Durchführung des Verfahrens nach einem der Ansprüche 1 bis 7 umfasst.

9. Computerprogramm mit durch einen Computer ausführbaren Programmcodeanweisungen zur Implementierung des Verfahrens nach einem der Ansprüche 1 bis 7, wenn das Computerprogramm auf einem Computer ausgeführt wird.

10. Speichermedium mit einem durch einen Computer ausführbaren Computerprogramm gemäß Anspruch 9.
